# EUROPEAN PATENT APPLICATION

(11) **EP 3 118 787 A1**
(43) Date of publication of application: **18.01.2017**
(21) Application number: 15306164.3
(22) Date of filing: 16.07.2015
(51) Int. Cl.: G06Q 10/10, G06F 17/30

(54) **METHOD FOR TIME RECURRENCE MINING IN DATA BASES**

(71) Applicant: Thomson Licensing, 92130 Issy-les-Moulineaux (FR)
(72) Inventor: DEFRANCE, Serge, 35576 Cesson-Sévigné (FR); GAUTIER, Eric, 35576 Cesson-Sévigné (FR); LE BOLZER, Françoise, 35576 Cesson-Sévigné (FR)
(74) Representative: Huchet, Anne

(57) **Abstract**

A digital life agent and a method for the use of a digital life agent are described including receiving event data for a person, storing the event data in an event table, creating a time table using the event data stored in the event table, storing the time table, receiving a query from a user and using the time table to respond to the query. Also described are a method and apparatus for detecting a need for personal services including monitoring daily activities of a person, recording the daily activities in a data base, reorganizing the data base, accessing the re-organized data base on a periodic basis, detecting an anomaly in the daily activities recorded in the data base and providing information regarding the detected anomaly in the daily activities to a personal services provider.

## Description

### FIELD

The proposed method and apparatus relate to the use of digital life agents (consumer devices, end devices) to collect, store and mine data in order to provide personalized services.

### BACKGROUND

This section is intended to introduce the reader to various aspects of art, which may be related to the present embodiments that are described below. This discussion is believed to be helpful in providing the reader with background information to facilitate a better understanding of the various aspects of the present disclosure. Accordingly, it should be understood that these statements are to be read in this light.

With the development of the Internet Of Things, home systems will collect and classify data on user activities in the home. Collection will be systematically performed over a long period of time (possibly several years). Information will be stored in a data base. Time is one parameter (unit of information, information element) among others, which will be collected and stored for each activity. Data collected and stored in the data base will then be mined in order to discover user habits, in order to be able to offer personalized services to the user.

Data will be collected for single events. Each single event occurs once. But, same type of event may repeat regularly, like "sleeping" hopefully occurring every night. One major information element in this context is time. For each event, collected time information is basically the event starting time (time at which the event started) and the event ending time (from which duration can be determined as and if necessary).

A typical question to discover regular activities (which means that same type of event regularly occurs) is, for instance, which event occurs every Sunday morning during the summer period. Discriminate which event corresponds to a Sunday morning in the summer period requires using the raw time information to determine (calculate, compute) the date (summer), the day (Sunday) and the time (morning). Therefore, if mining directly from raw time information, discovering habits will lead the data miner to perform many computations. If heavy computational processing on raw time data is required, answering this type of questions will not be easy.

The proposed method and apparatus is able to answer to this type of question more easily. The proposed method and apparatus is based on the creation of an additional table in the data base judiciously organized.

### SUMMARY

The context of the personalized service is for care assistance for the elderly and aging and people with disabilities, where disabilities include either or both mental and physical disabilities. The personalized services are not limited to health care but can also include providing assistance with activities of daily living. Provision of personalized services may permit a person who is elderly, aging or disabled to remain in their home longer as opposed to being placed in an institutional setting. This has significant economic benefits for society as a whole in reduced costs for the care of a person so situated and the person benefits in being able to remain in an environment with which they are familiar longer.

Remaining in one's home is more convenient and comfortable for the person who is elderly or disabled. In that case, daily (or otherwise as needed) visits of specialized caregivers allows a person so situated to remain at home or remain at home for a longer time. Specialized caregivers may provide meals, help with activities of daily living including personal care, and/or medical care depending upon the person's health and needs. An important task for the specialized caregiver(s) is to observe and detect if the needs or health of the person being cared for change. If the health or needs change then the type and/or amount of care may need to change.

A digital life agent and a method for the use of a digital life agent are described including receiving event data for a person, storing the event data in an event table, creating a time table using the event data stored in the event table, storing the time table, receiving a query from a user and using the time table to respond to the query. Also described are a method and apparatus for detecting a need for personal services including monitoring daily activities of a person, recording the daily activities in a data base, re-organizing the data base, accessing the re-organized data base on a periodic basis, detecting an anomaly in the daily activities recorded in the data base and providing information regarding the detected anomaly in the daily activities to a personal services provider.

### BRIEF DESCRIPTION OF THE DRAWINGS

The proposed method and apparatus is best understood from the following detailed description when read in conjunction with the accompanying drawings. The drawings include the following figures briefly described below:
Fig. 1 shows a setting for the use of the proposed method and apparatus.
Fig. 2 shows an alternative setting for the use of the proposed method and apparatus.
Fig. 3 shows another alternative setting for the use of the proposed method and apparatus.
Fig. 4 is a flowchart of the operation of an exemplary digital life agent in accordance with the principles of the proposed method and apparatus.
Fig. 5 is a flowchart of the operation of the creation of a time table in an exemplary digital life agent in accordance with the principles of the proposed method and apparatus.
Fig. 6 is a block diagram of an exemplary digital life agent in accordance with the principles of the proposed method and apparatus.

It should be understood that the drawing(s) are for purposes of illustrating the concepts of the disclosure and is not necessarily the only possible configuration for illustrating the disclosure.

### DETAILED DESCRIPTION

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

Modern home systems are collecting a great deal of data on the daily activities of people at home. The data collection is based on the deployment of a plurality of sensors. Querying the data base of the collected information may be very helpful in the detection of anomalies and trends in the regular habits of the person served by caregivers including detecting and identifying health problems or potential health problems. Queries may be sent (submitted) to the data base relative to the time and according to the daily life time pattern (period of the day, day of the week, period of the year) and habits of the person receiving services. Answering these queries may take a relatively long time when the data bases are classically organized as a collection of events with time considered as an attribute or parameter (event table). The proposed method and apparatus classifies information in an orthogonal way, where data is organized as a collection of hours and where events are considered as attributes. In reorganizing data bases in such a manner, queries are more promptly and efficiently answered. Each caregiver or selected trusted (authorized) caregivers may have access to the data bases for the purpose of performing a relatively in depth inspection and analysis in order to identify anomalies and trends. The identification of anomalies and trends aids in providing appropriate services in a timely manner.

The proposed method and apparatus requires only limited computing resources. The limited computing resources required make the implementation of the proposed method and apparatus feasible on portable devices such as smartphones or tablets (which are convenient computing tools for a caregiver) or even on a gateway type device. Such an end device is termed digital life agent herein, The digital life agent (smart phone, tablet, gateway device and the like) is usually proximate to the user and can gather information regarding the user's habits and activities. From such information (data) a profile can be inferred for each user. There may be multiple users in a home. The profile can be used to personalize services offered to the user by a caregiver service.

A typical question to discover regular activities (which means that same type of event regularly occurs) is, for instance, which event occurs every Sunday morning during the summer period. Discriminate which event corresponds to a Sunday morning in the summer period requires computations (calculations) using the raw time information(data). Therefore, if mining directly from raw time information (data), discovering habits will lead the data miner to perform many computations. If heavy computational processing on raw time data (information) is required, answering this type of questions will be difficult.

The proposed method and apparatus is based on the creation of an additional table in the data base, which is called *time table* in the following text (while the *event table* is a classical table in which a collection of events is "classically" stored). The event table includes a unique ID for the event, a name for the event, a start time of the event, and end time of the event, a location at which the event took place and contextual information about the event (if available and if applicable). A final column may be used for any other pertinent information. The time table of the proposed method and apparatus includes a unique ID for the event (same as the unique ID of the event form the event table), the hour of the day (24 hour clock), the day of the week (coded numerically from 1-7, with Sunday being coded as 1), the day of the month (coded from 1-31), the week of the year (coded from 1 -52), the month of the year (coded from 1- 12) and the year. The proposed method and apparatus judiciously organizes the time table as follows :
- Add one row to the time table for each hour falling within the duration of each event (including the hour containing the starting time and the hour containing the ending time). The time table rows need not be limited to one hour intervals but may be half hour intervals, quarter hour intervals or any other convenient time unit.
- Each row contains at least the following time elements: the hour of the day, the day of the week, the day of the month, the week of the year, the month of the year, the year, and any other time-related information that may be relevant to the application.
- Additional time information may also be stored in each row, for example the day of year, depending of additional requirements of the potential queries which may be addressed to the time table.
- In addition each row contains a unique id corresponding the event line of the event table (in order to make the connection which the event information).

### Working example

The table below represents an example of a basic information currently collected and stored, which is called the event table in the present description.

| Unique ID | Activity Name | Start Time | End Time | Location | Contextual info | Etc... |
|---|---|---|---|---|---|---|
| 1 | Sleeping | 1421623143 | 1421643001 | Bedroom | Quiet sleep | |
| 2 | To_Toilet | 1421643028 | 1421643133 | Bathroom | none | |
| 3 | Sleeping | 1421643480 | 1421650200 | Bedroom | Quiet sleep | |
| 4 | To_Toilet | 1421650381 | 1421651100 | Bathroom | none | |
| 5 | Meal_Prepara tion | 1421651280 | 1421651580 | Kitchen | none | |
| 6 | Eating | 1421651590 | 1421652900 | Kitchen | none | |
| 7 | Wash_Dishes | 1421652910 | 1421653020 | Kitchen | none | |
| 8 | Leave_Home | 1421653827 | ongoing | Outside | Nice Weather | |
| etc | | | | | | |

Note that the Start and End times are given above in Epoch Unix timestamp format. For better understanding a translation in human readable date (corresponding to GMT time zone) is given below:

| Unique ID | Activity Name | Start date | End date |
|---|---|---|---|
| 1 | Sleeping | 18^{th} of January 2015 at 23h13 | 19^{th} of January 2015 at 4h50 |
| 2 | To_Toilet | 19^{th} of January 2015 at 4h50 | 19^{th} of January 2015 at 4h52 |
| 3 | Sleeping | 19^{th} of January 2015 at 4h58 | 19^{th} of January 2015 at 6h50 |
| 4 | To_Toilet | 19^{th} of January 2015 at 6h53 | 19^{th} of January 2015 at 7h05 |
| 5 | Meal_Preparation | 19^{th} of January 2015 at 7h08 | 19^{th} of January 2015 at 7h13 |
| 6 | Eating | 19^{th} of January 2015 at 7h13 | 19^{th} of January 2015 at 7h35 |
| 7 | Wash_Dishes | 19^{th} of January 2015 at 7h35 | 19^{th} of January 2015 at 7h37 |
| 8 | Leave_Home | 19^{th} of January 2015 at 7h50 | pending |

The time table may be filled in after the fact or over time as the events are occurring. In both cases, the time table structure will be the same and will follow the same storing process. For each new event, a new row is created in the event table with provisional information (typically the start time is known, but the end time is not necessarily known). In parallel, a new row corresponding to this event is created in the time table with the time stamp of the current hour of the day. As long as the event lasts, an additional row is created in time table for this event each time a new current hour of day is detected (determined). When the event stops (ceases, is completed), the corresponding row in the event table is updated (at least by storing the end time value). Corresponding current hour row in the time table does not require any update and it is the last row corresponding to this event which is stored in the time table.

Below is an example of the time table corresponding to the event table above.

| Event Unique ID | Hour of Day | Day of Week | Day of Month | Week of Year | Month of Year | Year |
|---|---|---|---|---|---|---|
| 1 | 23 | 1 | 18 | 4 | 0 | 2015 |
| 1 | 0 | 2 | 19 | 4 | 0 | 2015 |
| 1 | 1 | 2 | 19 | 4 | 0 | 2015 |
| 1 | 2 | 2 | 19 | 4 | 0 | 2015 |
| 1 | 3 | 2 | 19 | 4 | 0 | 2015 |
| 1 | 4 | 2 | 19 | 4 | 0 | 2015 |
| 2 | 4 | 2 | 19 | 4 | 0 | 2015 |
| 3 | 4 | 2 | 19 | 4 | 0 | 2015 |
| 3 | 5 | 2 | 19 | 4 | 0 | 2015 |
| 3 | 6 | 2 | 19 | 4 | 0 | 2015 |
| 4 | 6 | 2 | 19 | 4 | 0 | 2015 |
| 4 | 7 | 2 | 19 | 4 | 0 | 2015 |
| 5 | 7 | 2 | 19 | 4 | 0 | 2015 |
| 6 | 7 | 2 | 19 | 4 | 0 | 2015 |
| 7 | 7 | 2 | 19 | 4 | 0 | 2015 |
| 8 | 7 | 2 | 19 | 4 | 0 | 2015 |
| 8 | 8 | 2 | 19 | 4 | 0 | 2015 |
| 8 | 9 | 2 | 19 | 4 | 0 | 2015 |
| 8 | 10 | 2 | 19 | 4 | 0 | 2015 |
| 8 | 11 | 2 | 19 | 4 | 0 | 2015 |

In this example, the time information (Hour of Day, Day of Week, etc.) is coded according to the Android Calendar class convention:
- Hour of Day is used for the 24-hour clock.
- Day of Week is coded with an integer between 1 and 7, where 1 corresponds to Sunday, which is considered as the first day of the week and 7 corresponds to Saturday, which is considered the last day of the week.
- Week of Year indicates the week number within the current year.
- Month of Year starts with value zero for January.

The last row referring to event 8 (Leave_Home) contains 11 as Hour of Day. Event 8 is still ongoing (end time ongoing in event table): each new hour, a new row is added referring to this event until it ends. The above example is a sample of the time table at 11h00 the 19^{th} of January.

Thanks to the time table, it is possible to collect all events occurring in a certain period of time defined as a collection of periods of time. For instance, the below SQL query will return event id of all events which occurred on Sunday morning between 8 and 10 am during the summer period:
*Select EventUniqueID in TimeTable where HoD IN* (*8, 9, 10) AND DoW = 0 AND WoY >=26AND WoY <=38*
Once having event id list (based on time sorting), it is easy to make additional queries on the event table based on other criteria other than time (using this list in the SQL where clause).

It should be noted that the rows of the time table only contain integers. This fact is favorable to keep the size of the table rather small.

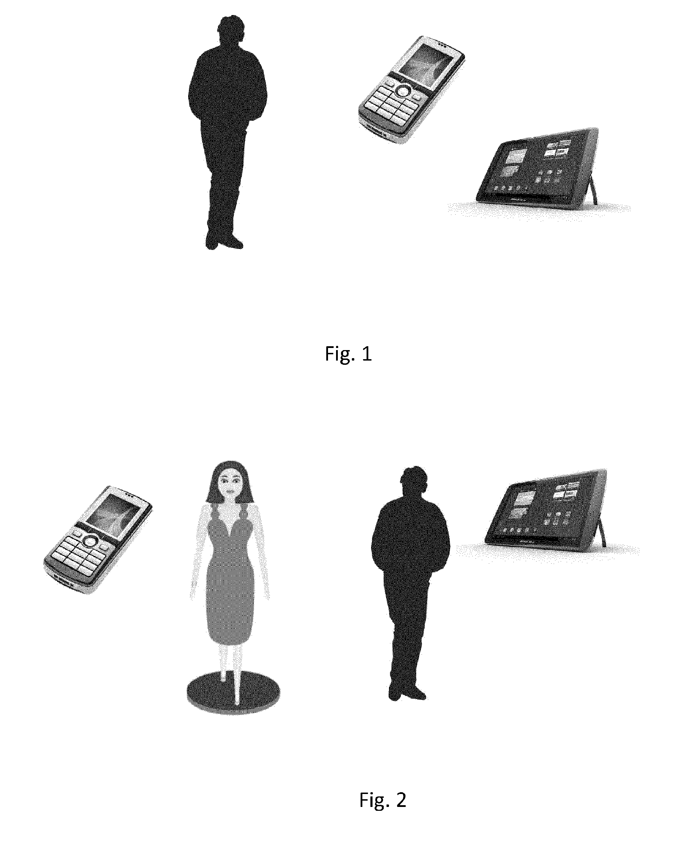

Fig. 1 shows a setting for the use of the proposed method and apparatus. In Fig. 1 a person receiving personalized care has in his home a cell phone and/or a tablet type device either of which are or can be configured as digital life agents. In an alternative the person receiving personalized services may wear a digital life agent similar to a medical alert device. However, instead of being configured only to alert an emergency service provider as in the case of a medical alert device, the digital life agent (wearable device, cell phone, tablet, etc.) collects event data (information) as described above and either on the fly or at predefined intervals creates a time table from the event table. Upon the visit of a caregiver authorized to query the data, the time table data base is queried (e.g., SQL) to analyze the data (information). At that time as well, the time table data base may be transferred either directly to the authorized caregiver's computer or the caregiver can direct that the data be transferred to a server by the communications interface of the cared for person's digital life agent.

Fig. 2 shows an alternative setting for the use of the proposed method and apparatus. In Fig. 2 there are two people in the home requiring care (personalized care services). Fig. 2 shows each person requiring and receiving the personalized service care has their own digital life agent that collects data for the person with whom the digital life agent is associated. In an alternative the person receiving personalized services may wear a digital life agent similar to as a medical alert device. However, instead of being configured only to alert an emergency service provider as in the case of a medical alert device, the digital life agent (wearable device, cell phone, tablet, etc.) collects event data (information) as described above and either on the fly or at predefined intervals creates a time table from the event table. Upon the visit of a caregiver authorized to query the data, the time table data base is queried (e.g., SQL) to analyze the data (information). At that time as well, the time table data base may be transferred either directly to the authorized caregiver's computer or the caregiver can direct that the data be transferred to a server by the communications interface of the cared for person's digital life agent.

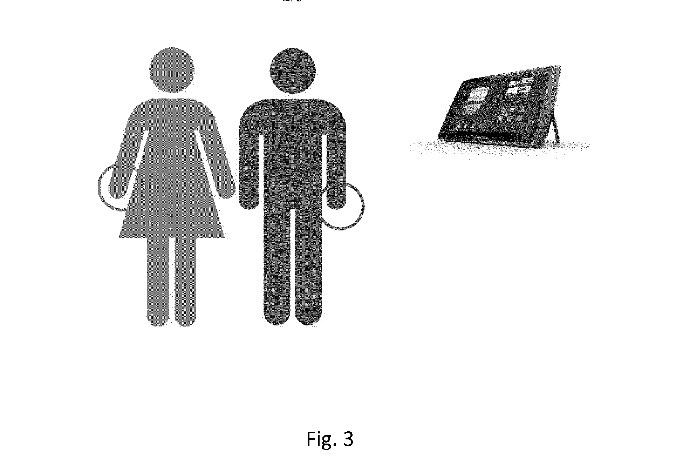

Fig. 3 shows another alternative setting for the use of the proposed method and apparatus. As shown in Fig. 3, two people each receiving personalized care services are both using the same digital life agent. In this case, each user may be outfitted with a bracelet type identification transponder for the tablet acting as a digital life agent can distinguish between data (information) collected for each user. The woman shown here with a red circle on her wrist to indicate her bracelet type identification transponder and the man has a blue circle on his wrist to indicate his bracelet type identification transponder. The identification transponder or digital life agent may alternatively be worn as a necklace or a pin. It should be noted that the two people may also be two men or two women. In an alternative the person receiving personalized services may wear a digital life agent similar to as a medical alert device. However, instead of being configured only to alert an emergency service provider as in the case of a medical alert device, the digital life agent (wearable device, cell phone, tablet, etc.) collects event data (information) as described above and either on the fly or at predefined intervals creates a time table from the event table. Upon the visit of a caregiver authorized to query the data, the time table data base is queried (e.g., SQL) to analyze the data (information). At that time as well, the time table data base may be transferred either directly to the authorized caregiver's computer or the caregiver can direct that the data be transferred to a server by the communications interface of the cared for person's digital life agent.

The analysis mentioned above with respect to Figs. 1 - 3, includes reviewing the queried data to detect anomalies and trends in order to offer additional or alternative personalized services designed to permit the user(s) to remain in his/her/their home longer. The personalized services offered may include (but are not limited to) medical services, dental services, hair care service, help with activities of daily living (e.g., dressing, bathing,...) meal preparation, grocery shopping, light housekeeping, help writing letter, reading in the case of a visually impaired user, companion services, etc.

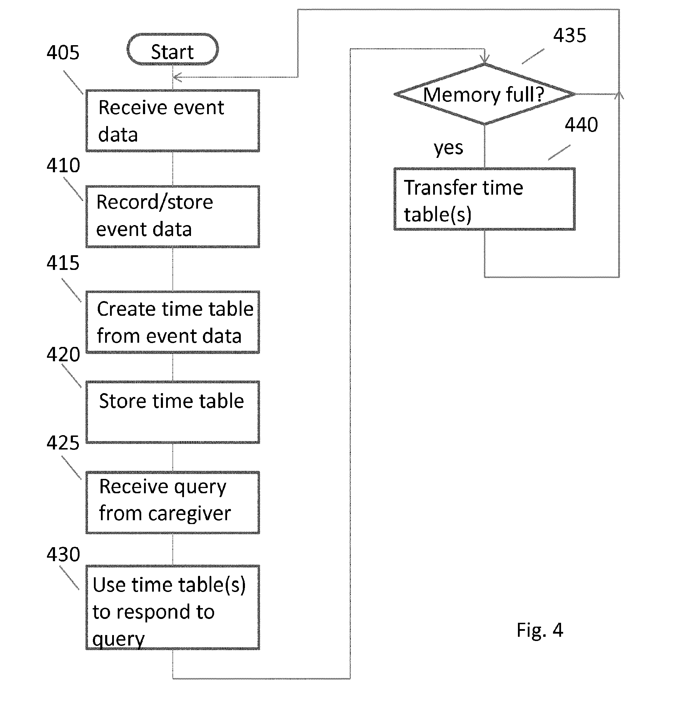

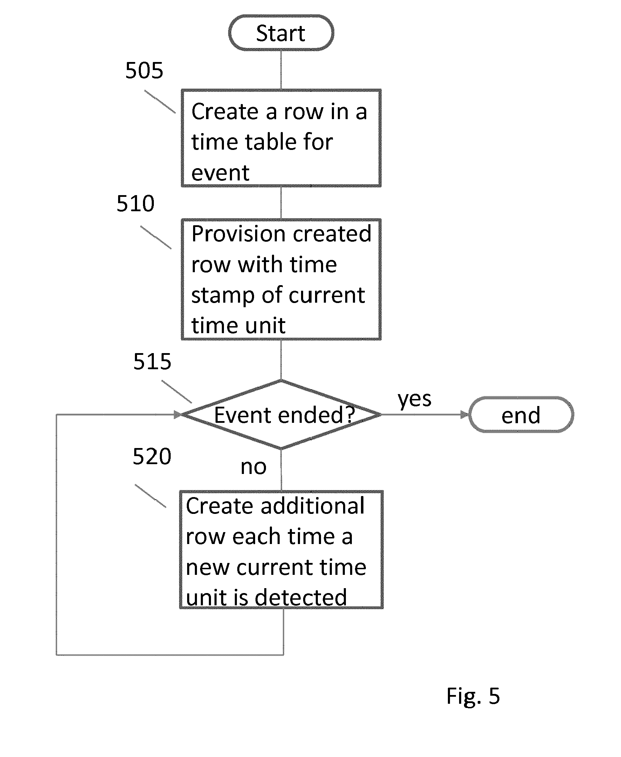

Fig. 4 is a flowchart of the operation of an exemplary digital life agent in accordance with the principles of the proposed method and apparatus. If the digital life agent is not a dedicated wearable device, it is assumed that a smart phone or tablet has the ability to multi-task and can operate in the usual manner in which such devices operate (make phone calls, browse the Internet, etc.) as well as perform the operations depicted in Fig. 4 and described below. At 405 event data (information) is received. At 410 the received event information is recorded (stored) in memory. At 415 the digital life agent creates time tables from the event data (information). The time table process was described above and will be described further with reference to Fig. 5 and described below. Time tables can be created on the fly as the event data (information) is received or at predetermined time times (e.g., daily at 2 AM). At 420 the created time tables are stored in memory. The memory may be a single memory unit or separate units may be available for the event information and the created time tables. At 425 the digital life agent receives a query (e.g., SQL) from a caregiver. The caregiver may be a trusted and authorized caregiver and access the user's digital life agent directly or may communicate with the user's digital life agent by the caregiver's smartphone, laptop, tablet, etc. The digital life agent responds to the query using the created time tables. At 435 a test is performed to determine if the memory is full or has exceeded a predetermined threshold. If the memory is full or has exceeded a predetermined threshold then at 440 the time table(s) are transferred. The time table(s) may be transferred to the caregiver's smartphone, laptop, tablet, etc. or the caregiver may direct that the time tables be transferred by the digital life agent to a remote server. Transfer of the time table(s) to a remote server may be through a gateway device in the user's home. In the alternative, the digital life agent may have the ability to recognize when memory is getting full and initiate a transfer of the time tables to a remote server, before proceeding back to 405. If the memory is not full or has not exceeded a predetermined threshold then processing proceeds to 405.

The proposed method and apparatus (digital life agent) detects a need for personal services by monitoring (405) daily activities of a person (typically an elderly or handicapped person) and recording (410) the daily activities in a data base (in memory). The daily activities are events. The event data is reorganized (415) by creating a time table from the event data (in an event table). The reorganized data base (time table) is accessed (425) on a periodic basis in order to detect (430) an anomaly in the daily activities recorded in reorganized the data base. The information regarding the detected anomaly in the daily activities are provided (430) to a personal services provider.

Fig. 5 is a flowchart of the operation of the creation of a time table in an exemplary digital life agent in accordance with the principles of the proposed method and apparatus. At 505 a row is created in the time for the event. At 510 the row in the time table is provisioned with the time stamp of the current hour. It is also provisioned with the day of the week, the day of the month, the week of the year and the year as well as a unique event ID. At 515 a test is performed to determine if the event has ended. If the event has not ended then at 520 an additional row is created in the time table for each time a new current hour is detected. If the event has ended then processing ends. In actuality, the process returns to the processing shown in Fig. 4.

The digital life agent detects the need for personal services. A receive event data module, monitoring daily activities of a person through a communications interface module. The receive event data module records said daily activities in a data base in memory. A create time table module re-organizes the event data in the data base by creating a time table, which is stored in memory. A caregiver query module accesses the reorganized data base (time table) on a periodic basis and detects an anomaly in the daily activities recorded in the data base(time table). The caregiver query module provides information regarding the detected anomaly in the daily activities to a personal services provider through the communication interface module.

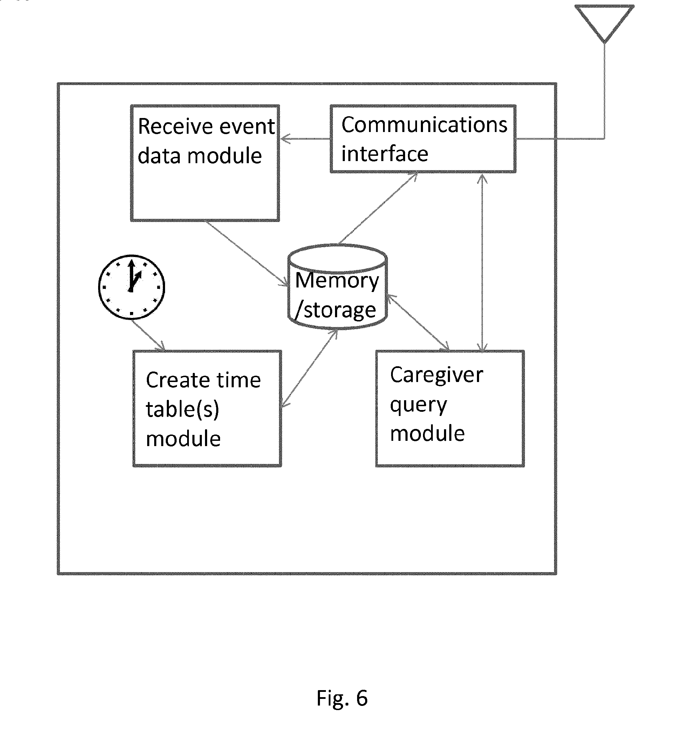

Fig. 6 is a block diagram of an exemplary digital life agent in accordance with the principles of the proposed method and apparatus. Event data (information) is received by the digital life agent through the communications interface, which forwards the event data (information) to the receive event data module. The receive event data module records/stores the event data (information) into memory (storage). The create time table(s) module creates time table(s) from the event data (information) stored in memory and stores the time tables(s) back into memory (storage). Since the time table(s) may be created on the fly or at predetermined times, the create time table(s) module has access to and receives input from a clock. Upon the arrival of a trusted (authorized) caregiver, a query (e.g., SQL) is received from the caregiver. The query may be by the caregiver directly accessing the user's digital life agent or may be by the caregiver accessing the user's digital life agent through the caregiver's computer (laptop, tablet, smartphone, etc.). The caregiver's query comes in through the communications interface and is forwarded to the caregiver query module, which access the time table(s) in memory (storage) to respond to the query. The caregiver query module also determines if the memory (storage) is full or has exceeded a threshold and directs the transfer of the time table(s) to the caregiver's computer (laptop, tablet, smartphone, etc.) or to a remote server (directly or possibly through a gateway device in the user's home). The time table(s) are transferred through the communications interface from memory (storage) under the direction of the caregiver query module. In an alternative embodiment, the memory (storage) may be able to determine that it is full or has exceeded a threshold and initiate a transfer to a remote server through the communications interface.

It is to be understood that the proposed method and apparatus may be implemented in various forms of hardware, software, firmware, special purpose processors, or a combination thereof. Special purpose processors may include application specific integrated circuits (ASICs), reduced instruction set computers (RISCs) and/or field programmable gate arrays (FPGAs). Preferably, the proposed method and apparatus is implemented as a combination of hardware and software. Moreover, the software is preferably implemented as an application program tangibly embodied on a program storage device. The application program may be uploaded to, and executed by, a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof), which is executed via the operating system. In addition, various other peripheral devices may be connected to the computer platform such as an additional data storage device and a printing device.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

It is to be further understood that, because some of the constituent system components and method steps depicted in the accompanying figures are preferably implemented in software, the actual connections between the system components (or the process steps) may differ depending upon the manner in which the proposed method and apparatus is programmed. Given the teachings herein, one of ordinary skill in the related art will be able to contemplate these and similar implementations or configurations of the proposed method and apparatus.

## Claims

1. A method for the use of a digital life agent, said method comprising:
storing (410) received event data (405) for a person in an event table;
creating (415) a time table using said event data stored in said event table;
storing (420) said time table; and
using (430) said time table to respond to a received query (425).

2. The method according to claim 1, further comprising:
determining (435) if a memory is full; and
transferring (440) said time table if said memory is full.

3. The method according to claim 1, wherein said user is a caregiver.

4. The method according to claim 1, wherein said time table creation further comprises:
creating a row in said time table for an event, said event being identified by a unique identifier;
provisioning said created row with a timestamp of a current time unit; and
creating an additional row in said time table each time a new current time unit is detected.

5. The method according to claim 4, further comprising further provisioning said created row in said time table with a day of a week, a day of a month, a week of a year, a month of said year, said year and other relevant time-related information.

6. The method according to claim 5, wherein said day of said week is coded numerically from one (1) to seven (7), wherein said day of said month is coded numerically from one (1) to thirty-one (31) wherein said week of said year is coded numerically from one (1) to fifty-two (52), wherein said month of said year is coded numerically from one (1) to twelve (12).

7. The method according to claim 3, wherein said caregiver offers personalized services to the person in addition to or different from personalized services currently being provided to said person based on results of said query.

8. An apparatus for the use of a digital life agent, said method comprising:
means for storing (410) received event data (405) for a person in an event table;
means for creating a time table using said event data stored in said event table;
means for storing said time table; and
means for using said time table to respond to a received query.

9. The apparatus according to claim 8, further comprising:
means for determining if a memory is full; and
means for transferring said time table if said memory is full.

10. The apparatus according to claim 8, wherein said user is a caregiver.

11. The apparatus according to claim 8, wherein said time table creation further comprises:
means for creating a row in said time table for an event, said event being identified by a unique identifier;
means for provisioning said created row with a timestamp of a current time unit; and
means for creating an additional row in said time table each time a new current time unit is detected.

12. The apparatus according to claim 14, further comprising further provisioning said created row in said time table with a day of a week, a day of a month, a week of a year, a month of said year, said year and other relevant time-related information.

13. The apparatus according to claim 15, wherein said day of said week is coded numerically from one (1) to seven (7), wherein said day of said month is coded numerically from one (1) to thirty-one (31) wherein said week of said year is coded numerically from one (1) to fifty-two (52), wherein said month of said year is coded numerically from one (1) to twelve (12).

14. The apparatus according to claim 10, wherein said caregiver offers personalized services to the person in addition to or different from personalized services currently being provided to said person based on results of said query.

15. A method for detecting a need for personal services, said method comprising:
monitoring daily activities of a person;
recording (410) said daily activities in a data base;
re-organizing (415) said data base;
accessing (425) said re-organized data base on a periodic basis;
detecting (430) an anomaly in said daily activities recorded in said data base; and
providing (430) information regarding said detected anomaly in said daily activities to a personal services provider.

16. An apparatus for detecting a need for personal services, comprising:
means for monitoring daily activities of a person;
means for recording said daily activities in a data base;
means for re-organizing said data base;
means for accessing said re-organized data base on a periodic basis;
means for detecting an anomaly in said daily activities recorded in said data base; and
means for providing information regarding said detected anomaly in said daily activities to a personal services provider.
